# EUROPEAN PATENT APPLICATION

(11) **EP 4 586 041 A1**
(43) Date of publication of application: **16.07.2025**
(21) Application number: 24151359.7
(22) Date of filing: 11.01.2024
(51) Int. Cl.: G05D 1/242, G05D 1/249, G05D 1/246, G05D 1/43, G05D 107/70, G05D 109/10, G05D 111/10, G01C 21/00

(54) **STEERING AUTOMATED VEHICLES USING TRAJECTORIES GENERATED FROM HISTORY-CORRECTED LIDAR PERCEPTIONS**

(71) Applicant: embotech AG, 8005 Zürich (CH)
(72) Inventor: HAMPP, Elias Lukas, 8005 Zurich (CH); MAUDERLI, David, 8005 Zurich (CH); HEILMEIER, Alexander, 8005 Zurich (CH); DOMAHIDI, Alexander, 8005 Zürich (CH); LONGO, Stefano, 8005 Zürich (CH)
(74) Representative: E. Blum & Co. AG

(57) **Abstract**

The invention is notably directed to a computer-implemented method of steering an automated vehicle in a designated area using a set of one or more offboard sensors. Each of these sensors is preferably a 3D laser scanning Lidar, e.g., an infrastructure-based Lidar. The method comprising repeatedly executing algorithmic iterations, wherein each iteration comprises obtaining (S30) a grid, performing (S200) a revision procedure to revise the grid, and determining (S90) a trajectory for the automated vehicle, based on the revised grid. The grid is obtained (S30) as a 2D occupancy grid of cells. This is achieved by determining a state of each cell in accordance with a perception of the one or more offboard sensors. The aim of the revision procedure (S200) is to revise the obtained grid. The grid is revised by correcting the state determined for each of one or more of the cells based on a history of such a cell. Eventually, the method determines (S90) a trajectory for the automated vehicle, based on the revised grid, and forwards (S100) the determined trajectory to a drive-by-wire system of the automated vehicle, to steer the latter. The invention is further directed to related systems and computer program products.

## Description

### TECHNICAL FIELD

The invention relates in general to the field of computer-implemented methods of steering automated vehicles in a designated area using offboard sensors, as well as related systems and computer program products. In particular, it is directed to methods that generate 2D occupancy grids of cells obtained according to perceptions of offboard sensors to compute trajectories that are then forwarded to drive-by-wire systems of the automated vehicles to steer the vehicles, where grid cell states are corrected based on a cell history to compensate for temporary occlusion of the cells, signal quality loss, or other phenomena leading to inadvertent changes in the grid cell states.

### BACKGROUND

Self-driving vehicles (also known as autonomous vehicles or driverless vehicles) are vehicles that are capable of traveling with little, or even without, human inputs. Such vehicles use sensors (e.g., lidars, cameras, radars, sonars, GPS, and inertial measurement units) to perceive their surroundings. Likewise, automated vehicles may, in principle, be steered based on signals obtained from offboard sensors (i.e., external sensors, which are not in the vehicle). In both cases, sensory information is used to create a model of the vehicle's surroundings, such that this model can be used to generate a navigation path for the vehicle.

Motion prediction is a necessary part of self-driving applications that employ predictive planning techniques. Steering a vehicle based on perception signals obtained from offboard sensors requires frequent and multiple computations. I.e., each offboard sensor produces signals that must be interpreted and processed with a view to determining and updating trajectories for the vehicle and, this, at frequencies that typically are on the order of 5 to 20 hertz.

Sometimes, the grid cell states may be subject to inadvertent switching of the grid cell states, e.g., due to alterations of the perception signals or temporary occlusions. This affects the quality and interpretability of the generated grids, which also impacts the trajectory computation times and the reliability of the trajectories determined and may further pose a security issue.

### SUMMARY

According to a first aspect, the invention is embodied as a computer-implemented method of steering an automated vehicle in a designated area using a set of one or more offboard sensors. Preferably, the sensors are 3D laser scanning Lidars, which may be arranged as infrastructure-based Lidars. The method comprising repeatedly executing algorithmic iterations, wherein each iteration comprises obtaining a grid, performing a revision procedure to revise the grid, and determining a trajectory for the automated vehicle from the revised grid. The grid is obtained as a 2D occupancy grid of cells, which requires determining a state of each cell in accordance with a perception of the one or more offboard sensors. The aim of the revision procedure is to revise the grid obtained. The grid is revised by correcting cell states (i.e., the state as determined for each of one or more of the grid cells) based on a history of such cells. Eventually, the method determines a trajectory for the automated vehicle based on the revised grid and forwards the determined trajectory to a drive-by-wire system of the automated vehicle, to steer the vehicle in the designated area.

The algorithmic iterations are preferably executed at an average frequency that is between 5 and 20 hertz, and more preferably equal to 10 hertz. Such frequencies call for efficient computations. Now, an advantage of the present approach is that trajectories are determined on mere 2D grids (instead of 2.5 or 3D grids), which already reduces the computational load. A further advantage of the proposed method is that it makes it possible to compensate for temporary occlusion of the cells and inadvertent changes of cell values, which are detrimental to the trajectory computations. I.e., as a result of the revision procedure, the cell states are more stable over time, such that the trajectories obtained are more reliable. The correction mechanism is simple: it exploits the history of the cells to correct the cell states, which only requires few additional calculations. The overhead is even practically negligible when the historical data restricts to single cell memory values, as in embodiments discussed below. Mere arithmetic operations are required in this case. This, added to the fact that the grids are two-dimensional grids, limits the computational load, hence enabling computations that can be performed even at fairly high frequencies.

In embodiments, the state of said each cell is constrained to be one of three states, i.e., a free state, an occupied state, and an unknown state. The step of determining the state of each cell comprises initializing each cell to the unknown state, prior to attempting to setting the state of this cell to the free state or the occupied state in accordance with said perception. The obtained grid is revised by identifying cells of the obtained grid that are in the unknown state and inferring a state of each of the identified cells based on the respective history to correct the state as previously determined for each of the identified cells. Relying on quantified cell values considerably simplifies computer processing, hence allowing faster (and less power-demanding) computations. As a result of the initialization procedure, the states of the cells that are not determined to be in a free state or an occupied state at the end of an iteration remain the unknown state, by default.

In embodiments, at each iteration, the history of each cell is captured by a single cell memory value, which reflects a historical propensity of each cell to be in the free state or the occupied state. The method further comprises updating the single cell memory value at each iteration. The state of each of the identified cells is inferred in accordance with the respective, single cell memory value, as updated last. Relying on a single value allows remarkably simple (and thus fast) calculations, which are easily compatible with frequencies as contemplated herein.

In preferred embodiments, the single cell memory value is updated so as to be increased, respectively decreased, if said each cell is determined to be in the free state, respectively the occupied state. I.e., mere arithmetic operations are required, resulting in only a small calculation overhead.

A further, concurrent update mechanism may additionally be involved, to allow the cell to gradually forget its past, for security reasons. Namely, in embodiments, the single cell memory value is further updated, at said each iteration, so that an absolute value thereof is decreased if the state of the corresponding cell is determined to be the unknown state.

In embodiments, at updating said single cell memory value, the cell memory value is constrained to belong to a given interval of values. This gives rise to a safeguard that avoids unreasonable growth of the cell memory values. That is, the interval determines a period of time after which the revision procedure can no longer infer a free or occupied state, should the cell be repeatably determined to be in the unknown state.

Preferably, said single cell memory value is defined as an integer value. This value is updated so that it is incremented by 1, respectively decremented by 1, if the cell is determined to be in the free state, respectively the occupied state. The value is further modified so that its absolute value is decremented by 1 if the cell is determined to be in the unknown state. Mere integer arithmetic operations are required in that case. Endpoints of the interval consist of integer values of opposite signs. E.g., the interval is [-10, 10].

In embodiments, the set of one or more offboard sensors comprises *N* sensors, where *N* ≥ 2; The sensors are located at distinct positions in the designated area. Each of the *N* sensors is a 3D laser scanning Lidar. The grid is obtained as a 2D occupancy grid for each of the *N* sensors, such that *N* grids are obtained at each iteration. The revision procedure can for instance be performed for each of the *N* grids as obtained at each iteration, whereby the trajectory is determined based on the *N* grids as revised according to said revision procedure.

In embodiments, each iteration further comprises fusing data from the *N* grids obtained (this causes to obtain a fused grid), prior to performing the revision procedure for the fused grid. As a result, the trajectory is determined based on the fused grid as revised according to the revision procedure. Fusing data help achieve a more complete, consistent, and accurate representation of the designated area, or portions thereof.

The data are preferably fused as follows. First, sensor data are dispatched to *K* processing systems, whereby each processing system *k* of the *K* processing systems receives *Nₖ* datasets of the sensor data as obtained from *Nₖ* respective sensors of the set of *N* offboard sensors, where *k* = 1 to *K, K* ≥ *2, Nₖ* ≥ 2 b' *k,* and *N* = ∑*ₖ Nₖ.* Second, the *Nₖ* datasets are processed at each processing system *k* to obtain *Mₖ* occupancy grids corresponding to perceptions from *Mₖ* respective sensors of the offboard sensors, respectively, where *Nₖ* ≥ *Mₖ* ≥ 1, where the *Mₖ* occupancy grids overlap at least partly.

The data from the *N* grids are advantageously fused as follows. Data from the *Mₖ* occupancy grids obtained are fused at each processing system *k* to form a fused occupancy grid, whereby *K* fused occupancy grids are formed by the *K* processing systems, respectively. In this case, the revision procedure may possibly by performed by each of the *K* processing systems for a respective one of the *K* fused occupancy grids. Each iteration further comprises forwarding the *K* fused occupancy grids (once revised, if necessary) to a further processing system, and merging, at the further processing system, the *K* fused occupancy grids to obtain a global occupancy grid for the designated area. Eventually, the revision procedure may advantageously be performed again for the global occupancy grid. Thus, the trajectory may eventually be determined based on the global occupancy grid, as optionally revised according to the revision procedure.

In other words, the processing systems produce occupancy grids which are pre-fused (locally, at the level of the *K* processing systems), before being merged by a distinct processing system. Performing the prefusion at the level of the *K* processing systems makes it possible to save bandwidth. The trajectories can then be computed (e.g., by the further processing system or one or more additional processing systems) according to any known, suitable trajectory planning scheme.

According to another aspect, the invention is embodied as a computer program product for steering an automated vehicle in a designated area, the computer program product comprising a computer readable storage medium having program instructions embodied therewith. The program instructions are executable by processing means of a computerized system, to cause the computerized system to repeatedly execute several algorithmic iterations, each comprising steps as described in reference to the method of any of the above embodiments.

According to a final aspect, the invention is embodied as a system for steering an automated vehicle in a designated area. The system comprises a set of one or more offboard sensors (each being preferably a 3D laser scanning Lidar), and one or more processing systems. The one or more processing systems are configured to repeatedly execute algorithmic iterations. In operation, each iteration comprises: obtaining a grid as a 2D occupancy grid of cells by determining a state of each cell of the cells in accordance with a perception of the one or more offboard sensors; performing a revision procedure, whereby the obtained grid is revised by correcting the state determined for each of one or more of the cells based on a history thereof; and determining, based on the revised grid, a trajectory for the automated vehicle and forwarding the determined trajectory to a drive-by-wire system of the automated vehicle.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 is a diagram schematically illustrating high-level features of the proposed approach, whereby sensor datasets obtained from different offboard sensors (e.g., Lidars) are separately processed at distinct processing systems, pre-fused by such systems, and sent to a further processing system for it to merge the fused grids, based on which vehicle trajectories are subsequently obtained, as in embodiments;
FIG. 2A is a flowchart illustrating high-level steps of a method of steering an automated vehicle, according to embodiments;
FIG. 2B shows details of step S30 of FIG. 2A, in accordance with embodiments;
FIG. 2C shows details of step S200 (revision procedure), as performed for various grids obtained along the flow of FIG. 2A, according to embodiments;
FIG. 3 is a diagram illustrating overlapping occupancy grids, which are pre-fused by distinct processing systems, before being forwarded to a further processing system for it to merge the fused grids, as in embodiments;
FIG. 4 is a table illustrating how use is made of cell histories to infer states of cells of unknown status, as in embodiments;
FIG. 5 shows a global 2D occupancy grid generated at a given time point, as in embodiments.
In this example, the grid shows a representation of the surroundings of a given automated car (ego vehicle); and
FIG. 6 schematically represents a top view of an industrial parking lot, where used is made of perception signals obtained from infrastructure-based Lidars to determine (and repeatedly update) a trajectory for an automated car, to automatically steer the vehicle in the parking lot, as in embodiments.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Computerized systems, methods, and computer program products embodying the present invention will now be described, by way of non-limiting examples.

### DETAILED DESCRIPTION OF EMBODIMENTS OF THE INVENTION

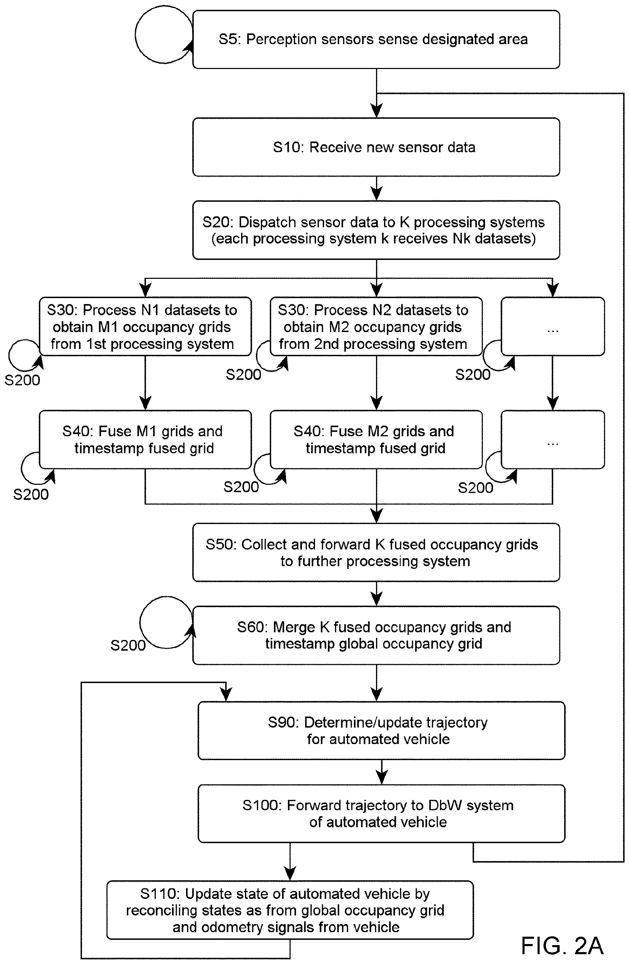

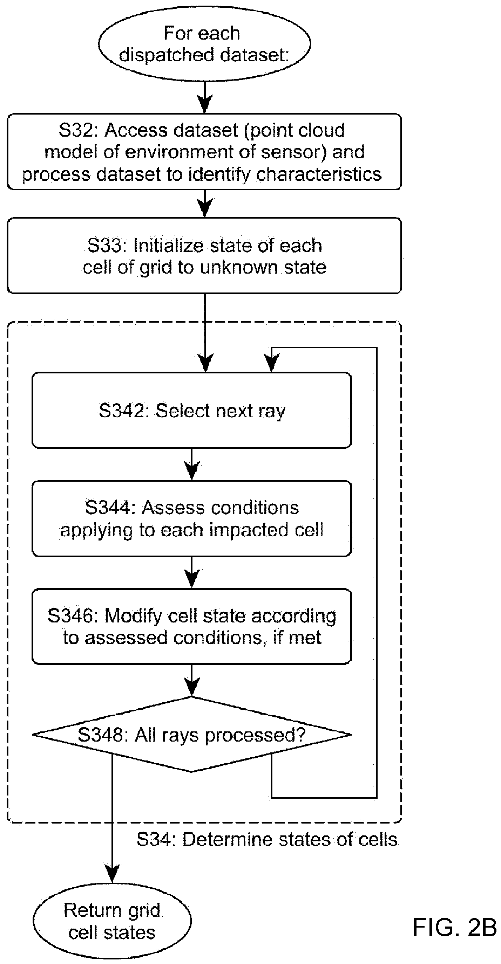

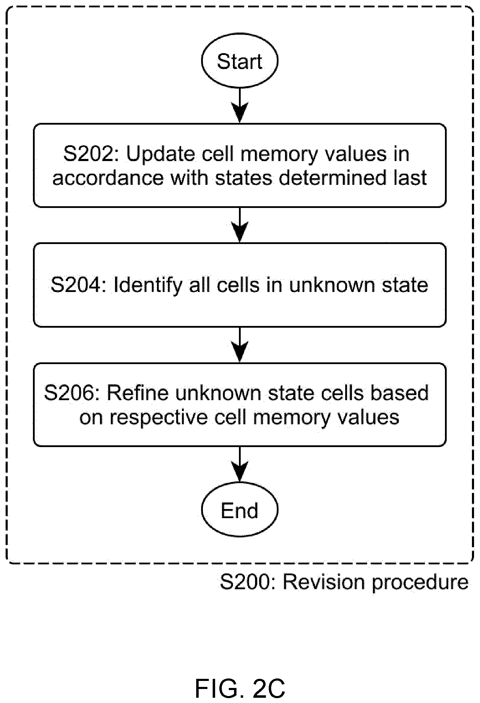

The following description is structured as follows. General embodiments and high-level variants are described in section 1. Section 2 addresses particularly preferred embodiments. Section 3 concerns technical implementation details. Note, the present method and its variants are collectively referred to as the "present methods". All references Sn refer to methods steps of the flowcharts of FIGS. 2A, 2B, and 2C, while other references pertain to devices, components, and concepts involved in embodiments of the present invention.

### 1. General embodiments and high-level variants

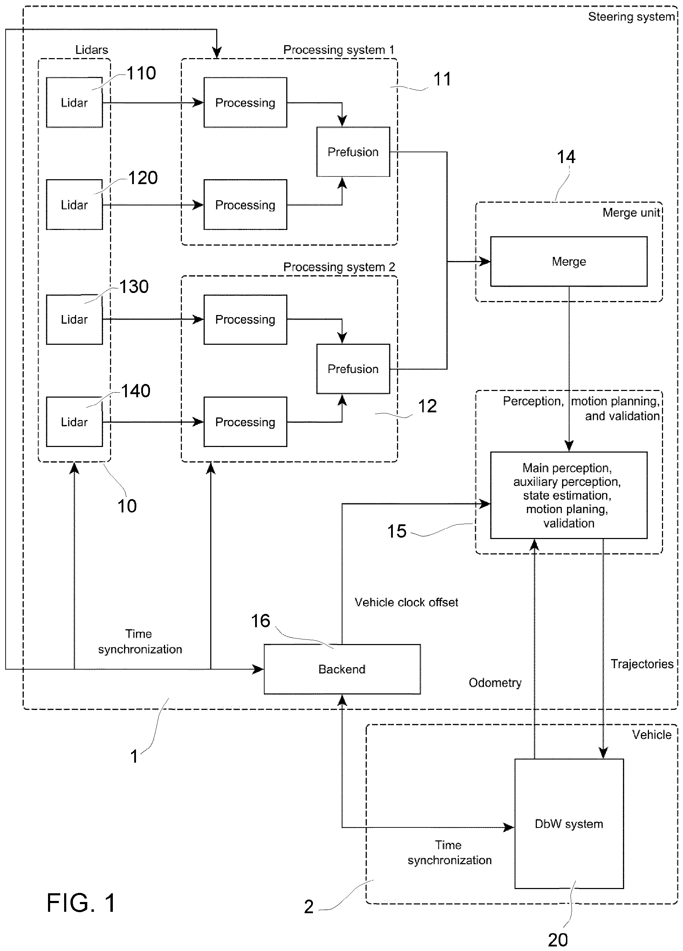

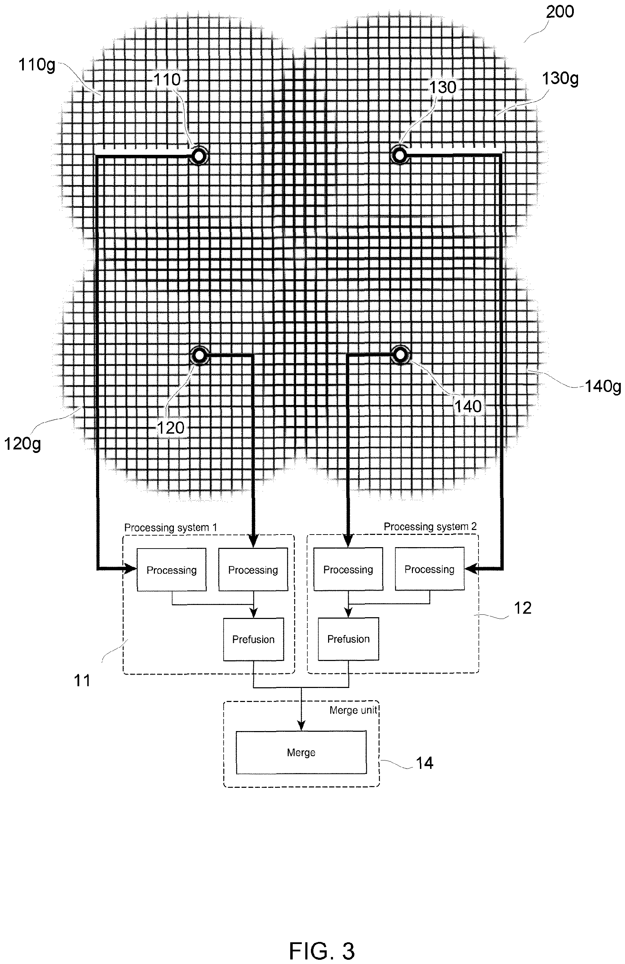

Referring to FIGS. 1, 2A, 2C, and 6, a first aspect of the invention concerns a computer-implemented method of steering an automated vehicle 2 in a designated area 5 using a set of one or more offboard sensors 110 - 140, as illustrated in FIGS. 1, 3, and 6. In preferred embodiments, each sensor is a 3D laser scanning Lidar. The method is implemented by a system 1, which concerns another aspect of the invention. The system 1 includes the set of offboard perception sensors 110 - 140, as well as one or more processing systems 11, 12, 14, 15 (see FIGS. 1 and 3), which are configured to perform steps according to the proposed method.

The vehicle 2 is partly automated: it includes a drive-by-wire (DbW) system 20, but typically has no sensing capability. That is, the automated vehicle 2 does not necessarily include perception sensors. In typical application scenarios, the vehicle 2 does actually not include any perception sensor at all. In other cases, the vehicle 2 include such perception sensors. However, such sensors are preferably not active, i.e., they are not used to calculate the trajectories referred to in the present methods. In variants, such sensors may be involved to perform further redundancy checks, in addition to the method steps described below.

The terminologies "autonomous" and "automated" are sometimes used as synonyms. In general, "autonomous", "semi-autonomous", and "partly autonomous", refer to concepts that involve some self-governance of machines that are capable of sensing their environment to safely move therein, avoiding obstacles and collisions with other objects, whether static or in motion. In this document, the terminology "automated" is to be understood as meaning that the automated vehicle incorporates automation to move (e.g., drive); it can automatically drive from one location to another, based on trajectories that are computed offboard and then communicated to the vehicle 2.

That is, in the context of the present document, such trajectories are primarily obtained from offboard (external) sensors 21 - 24, while the vehicle does typically not have (or make use) of sensing capability to sense its environment. However, the automated vehicle 2 is equipped with a DbW system 20, as seen in FIG. 1. As usual, the DbW system 20 includes electromechanical actuators, to allow actuation of the vehicle. E.g., the automated system 20 of the vehicle 2 is capable of taking control of the vehicle for the latter to start, accelerate, brake, steer, and stop, to be able to move from one location to another. The vehicle 2 may otherwise have minimal processing capability, if only to manage emergency stops.

The automated vehicle 2 is a ground vehicle, typically an automated car. In principle, such vehicles can be of any type, e.g., cars, vans, transit buses, motorcoaches, trucks, lorries, or any other types of ground vehicles that may benefit from automation. In typical embodiments, though, the present automated vehicles are production cars, vans, electric vehicles, or the likes, which benefit from automatic driving.

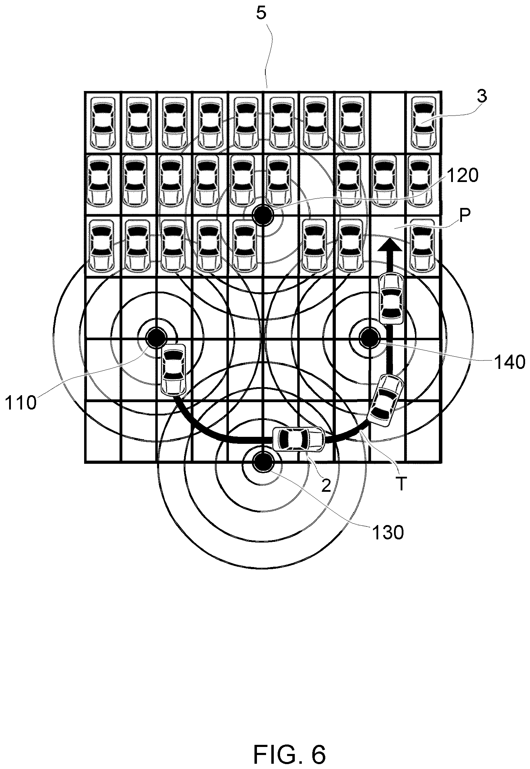

The vehicle 2 can be considered to form part of the system 1, or not. The offboard sensors may include various types of sensors. Preferred is to use 3D laser scanning Lidars 110 - 140, which may possibly be complemented by other types of sensors, such as cameras, radars, sonars, GPS, and/or inertial measurement units, if only to allow heterogenous redundancy checks, as in preferred embodiments. Such sensors are arranged in a designated area 5 (e.g., a parking lot, as assumed in FIG. 6). The sensors are preferably infrastructure-based sensors, i.e., sensor mounted on given parts of the infrastructure of the area 5. The sensor may be statically arranged in the area 5 of interest. The sensors can for instance be placed on pylons, poles or on given parts of the existing infrastructure. In variants, the sensors are movable sensors, i.e., sensors configured to move in the area 5. In that case, the sensors can be re-located to meet a specific logistics goal or a specific operation flow.

Various processing systems 11, 12, 14, 15 may form part of a control unit, which is in communication with the perception sensors 110 - 140 and the DbW system 20 of the vehicle 2. I.e., the control unit can send data to the vehicle 2 and receive data from the vehicle 2. Several vehicles may actually be steered through the control unit. To that extent, the control unit occupies a "central position" and can therefore be regarded as a central control unit, notwithstanding the several processing components 11, 12, 14 it includes.

The proposed method revolves around the repeated execution of algorithmic iterations (or algorithmic cycles), as exemplified in the flow of FIG. 2A. Essentially, each iteration comprises obtaining a grid, performing a revision procedure to revise this grid, and determining a trajectory for the automated vehicle, based on the revised grid. This grid may actually be gradually generated by fusing data from various initial grids, as in embodiments discussed later.

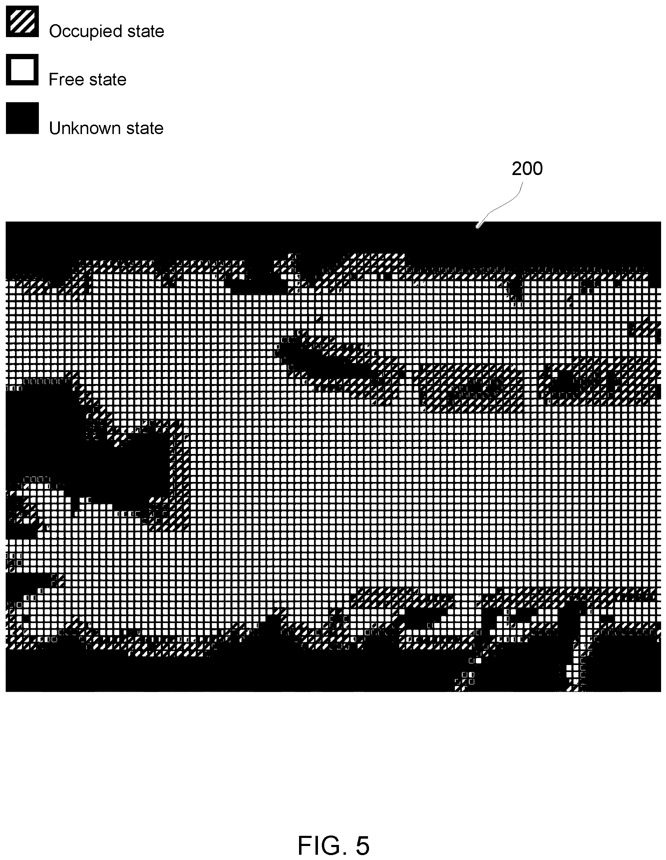

In detail, the grid is obtained (step S30, FIG. 2A) as a 2D occupancy grid of cells (see FIG. 5 for an illustration). This is achieved by determining a state of each of the grid cells in accordance with a perception of the one or more offboard sensors 110 - 140. Note, the present approach will typically involve several offboard sensors. However, it may already be implemented with a single offboard sensor. Preferably, a grid is obtained for each offboard sensor, as assumed in FIG. 2A. Alternatively, the grid may be obtained in accordance with signals from several sensors. In each case, the grid obtained is a 2D occupancy grid of cells, which are populated to reflect a perception of one or more sensors. Particularly preferred embodiments are described in section 2, which in particular describes how to populate grids from 3D laser scanning Lidars.

The revision procedure (step S200, FIG. 2A) aims at revising S204, S206 a grid previously obtained. This procedure may actually be performed for several grids, as obtained at different stages of the flow (i.e., within a same algorithmic iteration), as in preferred embodiments. The revision procedure amounts to correcting the states of one or more of the cells, as previously determined (e.g., at step S30, S40, or S60) based on a history of such cells. Typically, only a minority of cells in the grid are subject to such a correction, provided that the majority of cells are sufficiently resolved (thanks to the sensor perception obtained).

Eventually, a trajectory is determined S90, based on the revised grid, for the automated vehicle 2 and forwarded S100 to the DbW system 20 of the automated vehicle 2, so as to automatedly steer the latter. Steps S30 - S100 are repeatedly performed, hence the algorithmic iterations, see FIG. 2A. This causes to repeatedly update the vehicle trajectory, based on updated perceptions, which take into account changes in the environment of the vehicle 2. Note, updating a trajectory amounts to determining a new trajectory, albeit close to the previous trajectory. Trajectories sent to the DBW system 20 are then translated into commands for the electromechanical actuators of the DbW system 20, to allow actuation of the vehicle. I.e., the automated system 20 takes control of the vehicle, which will accordingly start, accelerate, brake, steer, and stop, so as to move from one location to another. Practically speaking, a trajectory can be defined as series of commands for respective actuators (acceleration, steering, and braking) and for successive time points. That is, such commands form a timeseries that embody a trajectory, which is determined in accordance with a goal set in space, or preferably set in both space and time.

As said, the algorithmic iterations are preferably executed at an average frequency that is between 5 and 20 hertz, and more preferably equal to 10 hertz. Such frequencies call for efficient computations. Now, an advantage of the present approach is that trajectories are determined on mere 2D grids (instead of 2.5 or 3D grids), which already reduces the computational load. A further advantage of the proposed method is that it makes it possible to compensate for temporary occlusion of the cells and inadvertent changes of cell values, e.g., due to alterations of the perception signals or temporary occlusions. Such phenomena affect the quality and interpretability of the generated grids, which also impacts the trajectory computation times and the reliability of the trajectories determined and may further pose a security issue. As a result of the revision procedure, the cell states are more stable over time, such that the trajectories obtained are more reliable. The correction mechanism is simple: it exploits the history of the cells to correct the cell states, something that only require few additional calculations. The overhead is even practically negligible when the historical data are compressed into single cell memory values, as in embodiments discussed below; mere arithmetic operations are required in this case. This, added to the fact that the grids are two-dimensional grids, limits the computational load, hence enabling computations that can be performed at fairly high frequencies (e.g., larger than 5 hertz) with affordable computer systems.

Several strategies can be contemplated to revise the grid. For example, one possible approach is to smooth cell values over time based on their history, to avoid spurious and/or intermittent cell changes. Various ad hoc heuristics can be contemplated for this purpose. In addition to time (history), such heuristics may further take spatial information into account, i.e., infer cell values not only from their history, but also from the values of neighbouring cells. Machine learning techniques may for instance be contemplated.

A much simpler approach, however, is to rely on heavily quantized cell values, which considerably simplifies computer processing, hence allowing faster (and less power-demanding) computations. In the most extreme case, the cell states can have to values, which correspond to a free state or an occupied state. Preferably, however, the cell states are constrained to be one of three states, i.e., the free state, the occupied state, and an unknown state. The unknown state corresponds to an intermediate case, where the state is not (sufficiently) determined as per the sensor perception. In this case, the state of each cell is advantageously determined S30 by first initializing S33 each cell to the unknown state (see FIG. 2B), prior to attempting to setting S34 the state of each cell to the free state or the occupied state, in accordance with the sensor perception. I.e., cells are by default in the unknown state. In turn, the grid is revised S204, S206 by identifying S204 those cells that are in the unknown state, and inferring S206 a state of each of the identified cells based on their respective history, so as to correct the (unknown) state as previously determined for each of the identified cells. As a result of the initialization procedure, the states of the cells that cannot be determined to be free or occupied remain the unknown state, by default. In particular, the state of any cell that is not allowed to be in a free state (e.g., because of occlusion) remains the unknown state. As explained above, it is nevertheless possible to refine unknown states of cells, by leveraging the history of this cell. The inferred state will typically be one of the free state and the unknown state. In embodiment, the revision procedure may enforce one of these two states. In preferred variants, the revision procedure may retain the unknown state where the cell history does not allow a conclusive inference to be made.

As seen in FIG. 2C, the history of each cell is preferably captured by (i.e., compressed into) a single cell memory value. This value reflects a historical propensity of each cell to be in the free state or the occupied state. For example, the sign of this value may determine a given state (free or occupied), while its magnitude indicates its historical propensity to be in this state. In this case, the method further comprises updating S202 the single cell memory value at said each iteration, and the state of each of the identified cells is inferred in accordance with the respective, single cell memory value, as updated last. Note, even though the cell memory value primarily indicates a propensity to be in the free state (e.g., positive value) or the occupied state (e.g., negative value), a magnitude close to zero calls for maintaining the unknown state. Relying on a single value allows simple and fast calculations, which are easily compatible with frequencies as contemplated herein.

A cell memory value is preferably updated S202 so that it is increased if the cell has previously been determined to be in the free state or, conversely, it is decreased if the cell has previously been determined to be in the occupied state. Mere arithmetic operations are required, resulting in only a small calculation overhead. As a result of this approach, a large positive cell value suggests that the cell is still free (free state), while a large negative value suggests that the cell is still occupied (occupied state). I.e., the sign determines the state, while the magnitude (or absolute value) determines the historical propensity for the cell to be in that state.

A concurrent update mechanism may additionally be involved to allow the cell to gradually forget its past, for security reasons. I.e., in embodiments, each single cell memory value is further updated (step S202, at each iteration) so that an absolute value of the cell memory value is decreased if the state of the corresponding cell has previously been determined to be the unknown state. This makes it possible to implement a forgetting mechanism. Moreover, a safeguard can be implemented to avoid unreasonable growth of the cell memory values. For instance, when updating a single cell memory value, this cell memory value is preferably constrained to belong to a given interval. Together with the forgetting mechanism, this interval determines a period of time after which the revision procedure can no longer infer a free or occupied state. In practice, when a cell is repeatably determined to be in the unknown state, its cell memory value decreases and eventually reaches zero, so that it can no longer allow the cell state to be inferred to be free or occupied.

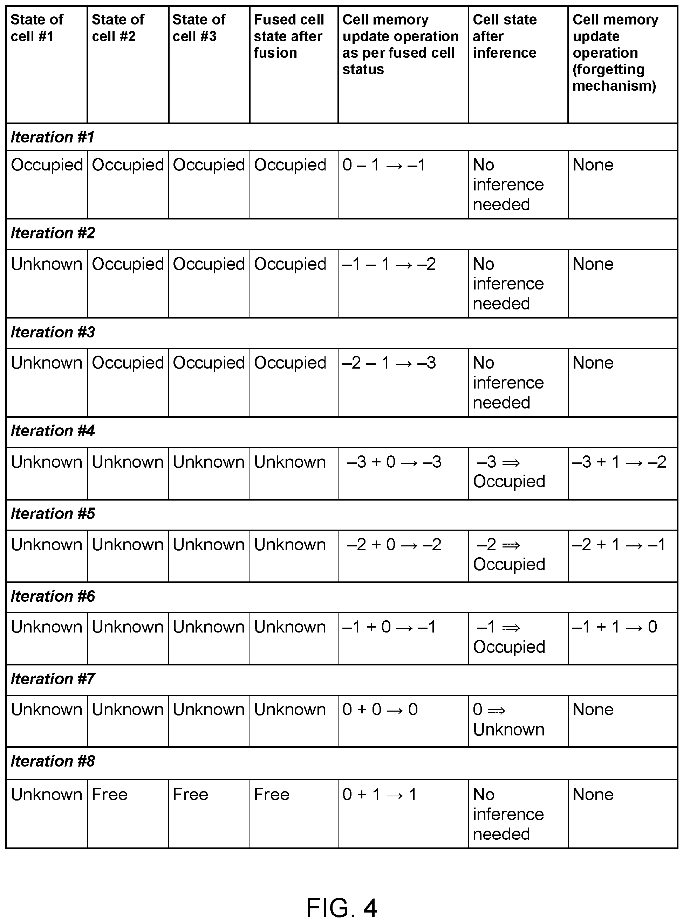

A concrete example is now discussed in reference to FIG. 4. In this example, each cell memory value is defined as an integer value. This value is updated S202 so that it is incremented by 1, respectively decremented by 1, if the cell is determined to be in the free state, respectively the occupied state. In addition, the memory cell value is modified so that its absolute value is decremented by 1 if the cell is determined to be in the unknown state. That is, the cell memory value is computed as a count, which is incremented, decremented, or left unchanged, in accordance with the state of the cell as determined last from the perception. Note, the cell memory update is not based on the state that results from the inference made at step S206 (revision). The endpoints of the safeguard interval consist of integer values of opposite signs. The interval considered can typically be [-10, 10]. In variants, this interval can be biased towards positive or negative values, hence favouring a free state or an occupied state. Such a bias may sometimes be desired, depending on the scenario considered and the safety policy adopted. Restricting to integer values further simplifies calculations; only integer arithmetic operations are required.

FIG. 4 is a table showing states as determined for three coinciding cells (cell #1, cell #2, and cell #3), in accordance with overlapping perceptions formed from three respective Lidars. I.e., the values of such cells come from distinct Lidar measurements, which yield distinct (albeit overlapping) grids. As the grids partly overlap, at least some of the cells of one grid coincide with cells of one or each of the other two grids, as illustrated in FIG. 3. Such cells are meant to be fused or merged.

During the first iteration (Iteration #1), the state of each of the cells (cell #1, cell #2, and cell #3) is determined to be the occupied state. A majority vote obviously concludes to an occupied state for the fused cell (fourth column). Accordingly, the cell memory value of the fused cell is decreased (fifth column), so that the updated cell memory value is equal to -1. This value is initially set equal to 0; the operation performed reads 0 -1 → -1, such that the new cell memory value is equal to -1. No inference (sixth column) is needed here as the majority vote unambiguously concludes to an occupied state. For the same reason, no additional update (seventh column) is required, as there is no need to forget the accumulated value.

During the second iteration, the cell states remain the same for cell #2 and cell #3, while the first cell is now determined to be unknown. A majority vote again concludes to an occupied state for the fused cell. The cell memory value is thus decreased again (-1 - 1 → -2). The same observations are made during the third iteration (the cell states remain unchanged), such that the vote concludes to an occupied state. The cell memory value is accordingly decreased (-2 - 1 → -3). However, during each of the next four iterations (Iteration #4 to #7), all cells now happen to be in the unknown state, something that may typically results from a temporary occlusion or a signal alteration. In such cases, the actual state of the fused cell can be inferred to be occupied, based on the history of the cell but only as long as the forgetting mechanism permits.

Practically speaking, use is made of the last known cell memory value (i.e., -3) during the 4^{th} iteration. This value indicates that the state is probably still occupied (-3 ⇒ Occupied). As no new information is available (the state determined last is the unknown state), the cell memory value is decreased toward zero (i.e., -3 + 1 → -2), as a result of the forgetting mechanism. The same repeats over the next two iterations (-2 + 1 → -1, -1 + 1 → 0), until the cell memory value reaches the value zero. From this point on, it can no longer be assumed that the fused cell is occupied, and its state now switches to "unknown" during the 7^{th} iteration. If the next vote (8^{th} iteration) concludes to a free state, however, then the count can be increased again (0 + 1 → 1), and so on. Note, various practical implementations can be contemplated for the above mechanism. In particular, the distinction between the 5th and 7th column is made for the sake of clarity. In practice, however, the cell memory would likely be updated in a single step.

Again, the above revision procedure may possibly be implemented before fusing the grids (i.e., after step S30 in FIG. 2A), after the prefusion (i.e., after step S40 in FIG. 2A), and/or after merging the fused grids (i.e., after step S60 in FIG. 2A). Given the simplicity of the operations required (integer arithmetic operations), this revision procedure may well be implemented in respect of each grid, i.e., upon completing step S30, upon completing step S40, and after merging S60 the fused grids, as assumed in FIG. 2A. Preferred fusion and merging mechanisms are now discussed in detail.

As assumed in FIGS. 1, 3, and 6, the set of offboard sensors preferably comprises N sensors 110 - 140, such that *N* grids are obtained (*N*≥ 2) at step S30. The sensors are located at distinct positions in the designated area 5. The N grids overlap at least partly, as illustrated in FIG. 3. In this case, the method may further comprise fusing S40 data from the N grids obtained. Eventually, the trajectory is determined based on the fused data.

Assume that the sensors are 3D scanning Lidars. In this case, the grids obtained at step S30 are preferably defined in polar coordinates. However, polar coordinates make it complicated to reconcile overlapping 2D grids. Therefore, the grids obtained at step S30 are preferably converted into Cartesian grids, prior to fusing grid data. That is, the cartesian grids have rectangular cells, as illustrated in FIGS. 3. The sensor locations and the corresponding grid definitions are devised so that some cells of different grids coincide. More precisely, the cells of any one of the *N* grids coincide with cells of one or more distinct ones of the *N* grids.

Referring back to FIG. 2A, the N grids are preferably obtained by dispatching S20 sensor data to *K* processing systems 11, 12 (see FIGS. 1 and 3), for reasons of scalability and computational tractability. In preferred embodiments, the number of such processing systems is larger than or equal to 4. That is, each processing system *k* of the *K* processing systems (*k* = 1 to *K*) receives, at each iteration, *Nₖ* datasets of sensor data, where *Nₖ* ≥ 2 ∀ *k.* Such data are obtained (step S5) from *Nₖ* respective sensors of the set 10 of offboard perception sensors 110 - 140.

The data are preferably fused in two steps, during each algorithmic iteration. That is, the *Nₖ* datasets are processed S30 by each processing system *k* to obtain *Mₖ* occupancy grids, where the *Mₖ* grids reflect perceptions from *Mₖ* respective sensors. That is, the first system processes *N*₁ datasets to obtain *M*₁ occupancy grids, the second system processes *N*₂ datasets to obtain *M*₂ occupancy grids, etc., as illustrated in FIG. 2A. Ideally, *Nₖ* occupancy grids are obtained upon completing step S30, i.e., *Mₖ* = *Nₖ.* However, in embodiments, some of the *Nₖ* datasets may be discarded, for timing reasons that are discussed later. Thus, in general, *Nₖ* ≥ *Mₖ* ≥ 1, and the *Mₖ* occupancy grids obtained are grids that overlap at least partly in space.

As illustrated in FIG. 1, each processing system *k* fuses S40 data from the *Mₖ* occupancy grids obtained at step S30 to form a fused occupancy grid. Thus, K occupancy grids are respectively formed by the *K* processing systems 11, 12. Note, the *K* grids will typically overlap at least partly in space, too. The fusion step S40 can be regarded as a prefusion operation, given that the *K* occupancy grids are later merged at step S60.

To that aim, the *K* occupancy grids are first forwarded S50 to a further processing system 14, which differs from the systems 11, 12. The processing system 14 merges S60 the *K* fused occupancy grids to obtain a global occupancy grid for the designated area 5. The merge operation S60 and the fusion operations S40 are similar operations, which can even be identical in terms of data processing (i.e., the same algorithm can be used). Both steps S40, S60 rely on data fusion and aim at reconciling data obtained from distinct sources, with a view to forming a more complete, consistent, and accurate representation of the designated area 5, or portions thereof.

Once a global occupancy grid has been obtained, the method can proceed to determine (or update) S90 a trajectory for the automated vehicle 2 based on the global occupancy grid, and forward S100 this trajectory to the DbW system 20 of the automated vehicle 2. Steps S90 and S100 can be performed by additional processing systems 15, i.e., systems that are distinct from the system 11, 12, and 14, as assumed in FIG. 1.

The control unit may comprise distinct sets of processors, where each of the sets comprises one or more processors. In particular, the processing systems 11, 12, 14, 15 can advantageously be mapped onto respective ones of the distinct sets of processors. Even, the processing systems 11, 12, 14, 15 are preferably implemented as distinct computers of the control unit. The exact mapping, however, may depend on the security levels offered by the (sets of) processors. In variants, the control unit may be embodied as a single computer, provided that its sets of processors are sufficiently safe. An example of suitable functional safety standard is defined by the ISO26262 standard for the development of electrical and electronic systems in road vehicles.

In the present context, several sensor datasets need to be repeatedly processed, at a high frequency. This translates into high throughput and compute requirements, which are difficult to meet, particularly with a secure computing system. To address this problem, the present systems and methods preferably rely on a scalable architecture, which allows the above requirements to be met, irrespective of the redundancy level desired (the processing systems 11, 12 can be redundant, for safety reasons).

According to the above approach, several processing devices 11, 12 are provided to handle sensor datasets from respective, distinct subsets of the perception sensors (e.g., Lidars), so as to allows tractable computations. The processing systems 11, 12 produce occupancy grids which are pre-fused (locally, at the level of the systems 11, 12), before being merged by a distinct processing system, which relies on distinct (sets of) processors. Performing the prefusion at the level of the processing systems 11, 12 makes it possible to save bandwidth. The trajectories can then be computed (e.g., by the system 14 or one or more other processing systems 15) according to any known, suitable scheme.

As noted earlier, the revision procedure can be performed S200 at several stages. For instance, the revision procedure can be performed for each of the N grids as obtained upon completion of step S30 (see FIG. 2A). In addition, the revision procedure can be performed S200 after fusing S40 the grids (i.e., for each fused grid), and again after merging S30 the fused grid (i.e., for the global occupancy grid). In this case, the trajectory as eventually determined at step S90 is based on the global occupancy grid as revised according to said revision procedure, where the global occupancy grid has been obtained from fused grids (each revised according to said revision procedure), which have themselves been obtained by fusing grids revised according to said revision procedure.

The *Nₖ* datasets are advantageously subjected to a specific timestamping scheme. In practice, the *Nₖ* datasets received at each iteration by each processing system *k* are respectively associated with *Nₖ* first timestamps, corresponding to times at which the Lidar measurements were performed. Now, such times may slightly differ, giving rise to time differences that may have to be adequately handled, for security reasons. To that aim, each iteration may further comprise assigning *K* second timestamps to the *K* fused occupancy grids (step S40), where each of the *K* second timestamps is conservatively chosen to be equal to the oldest source timestamp. That is, each of the *K* second timestamps is set equal to the oldest of the *Nₖ* first timestamps associated with the *Nₖ* datasets as processed at each processing system *k.*

Similarly, a global timestamp may be assigned (at step S60) to the global occupancy grid, as eventually obtained at each iteration. This global timestamp is set equal to the oldest of the *K* second timestamps. Eventually, the trajectory is determined or updated S90 in accordance with the global timestamp as set at step S60. The above timestamp assignment scheme makes it possible to check the temporality of incoming data and its validity for subsequent processing; this is particularly advantageous in a distributed system such as shown in FIG. 1. This assignment scheme provides a simple way to track the timing of perception measurements and ensure that obsolete data is removed from the downstream trajectory calculation.

In particular, this scheme makes it possible to discard any obsolete dataset from the occupancy grid calculation. I.e., the processing step S30 may discard any of the *Nₖ* datasets (as processed by any processing system *k*) that is older than a reference time for the *Nₖ* datasets by more than a predefined time period. This time period can for instance be set equal to 150 ms. As a result, *Mₖ* is at most equal to *Nₖ.* Note, the reference time can be computed as an average of the *Nₖ* timestamps, e.g., using a geometric or arithmetic average. More generally, any suitable definition of the average can be used, e.g., as derived from the generalized mean formula, preferably using an exponent that is larger than or equal to zero. So, any dataset that is older than the average time for the *Nₖ* datasets by more than the predefined time period is preferably discarded to ensure safer trajectory calculations.

To summarize, each of the *Nₖ* datasets is preferably processed S30 (by each processing system *k*) so as to initially determine a first 2D grid, which is initially defined in a polar coordinate system. This first grid is then converted into a second 2D grid, which is defined in a cartesian coordinate system. I.e., the *Mₖ* occupancy grids as eventually obtained at each processing system *k* are obtained as 2D grids having rectangular cells having the same dimensions. Similarly, the *K* fused occupancy grids and the global occupancy grid are, each, formed as a 2D grid having rectangular cells of the same dimensions. Moreover, such grids are arranged in such a manner that cells of the global occupancy grid coincide with cells of the *K* fused occupancy grids, and cells of the *K* fused occupancy grids themselves coincide with cells of the *Mₖ* occupancy grids as obtained at each of the *K* processing systems 11, 12.

This is illustrated in FIG. 3, where grids 110g, 120g are obtained and fused by a first processing system 11, thanks to output data from Lidars 110, 120, while grids 130g, 140g are concurrently obtained and fused by a second processing system 12, thanks to output data from Lidars 130, 140. The fused grids are then merged by a further processing system 14, which results in a global grid 200. These grids are finite in the 2D space in which they are defined (i.e., they include a finite number of cells). The grids partly overlap, whereby at least some of their rectangular cells coincide. I.e., the *Mₖ* occupancy grids overlap at least partly. And so do the fused grids.

In embodiments, the grids 110g - 140g are determined by determining states of the grid cells, in accordance with hit points captured in the datasets received from the Lidars. As illustrated in the realistic example of grid shown in FIG. 5, the cells can be marked as having a free state, an occupied state, or an unknown state, as explained earlier. In the example of FIG. 5, the grid reflects the world representation, i.e., the surroundings of a vehicle of interest. The representation of this vehicle (often referred to as "ego vehicle") is not incorporated in this depiction. Preferably, though, each occupancy grid captures a global representation, which further embeds a representation of the vehicle 2 in the world representation.

Data from the *Mₖ* occupancy grids can be fused S40 by computing, for each cell of the *K* fused occupancy grids, a value based on a state of each of the rectangular cells of each grid of the *Mₖ* occupancy grids obtained S30 earlier. The computed value is then associated with the respective cell. A similar or identical mechanism can be implemented to merge the *K* fused grids. For example, this value can be computed as a count, which is incremented, decremented, or left unchanged, in accordance with the determined state of the cell. That is, this value is incremented (e.g., by a unit value, or 1) if a corresponding cell of any of the *Mₖ* occupancy grids has a free state, decremented (e.g., by 1) if a corresponding cell of any of the *Mₖ* occupancy grids has an occupied state, and left unchanged if a corresponding cell of any of the *Mₖ* occupancy grids has an unknown state. That is, a simple voting system can be relied on, where each Lidar votes for 1, - 1, or 0, according to whether a cell is occupied, unoccupied or unknown. Again, mere integer arithmetic operations are needed, which make it possible to simply "fuse" information, thereby reducing the amount of data for downstream processing.

Another aspect of the invention concerns the system 1 itself, see FIG. 1. This system comprises a set 10 of offboard perception sensors (including one or more 3D laser scanning Lidars 110 - 140), as well as one or more processing systems 11 - 15. Note, the system 1 can be regarded as including the steered vehicle(s), it being reminded that the present techniques can be implemented to steer several automated vehicles at the same time. In general, the processing systems 11 - 15 are configured to repeatedly execute several algorithmic iterations, consistently with the present methods. In operation, each iteration comprises obtaining one or more 2D occupancy grids, performing a revision procedure to correct the cell states based on their history, accordingly determining a trajectory for the automated vehicle, and eventually forwarding the determined trajectory to the DbW system 20 of the vehicle 2 to steer the latter, as described earlier in reference to the present methods.

The processing systems 11 - 15 may for instance include *K* processing systems 11, 12 (to distribute the processing tasks and perform the prefusion), a further processing system 14 (to merge the fuse grids), as well as an additional processing systems 15 (to plan and validate trajectories). This way, the system 1 may dispatch sensor data to the *K* processing systems 11, 12, process datasets at each processing system *k* to obtain occupancy grids, fuse data from such occupancy grids to form fused occupancy grids, and forward the fused occupancy grids to the further processing system 14 for it to merge them and obtain a global occupancy grid, based on which a trajectory can eventually be determined and forwarded to the DbW system 20 of the vehicle 2. Each grid may possibly be revised according to the revision procedure described earlier.

The system 1 preferably comprises redundant sets (e.g., two sets) of processing systems, where each set comprises *K* processing systems (e.g., *K* ≥ 4). In this case, the system 1 is further configured to check whether occupancy grids obtained by each of the redundant sets match. Downstream computations continue as long as the occupancy grids match, else an auxiliary procedure (e.g., an emergency stop) is triggered.

The trajectories are preferably computed by dedicated processing systems 15, which are preferably distinct from the K processing systems 11, 12 and the further processing system 14. The systems 15 may for instance implement a main perception system and an auxiliary perception system, as assumed in FIG. 1, thanks to distinct processing systems (call them primary and auxiliary processing system), which are in communication with each other. That is, the primary processing system is configured to form a main perception based on signals from various types of perception sensors (e.g., involving Lidars and cameras), estimate states of the vehicle based on feedback signals from the DbW system 20, and compute trajectories for the vehicle 2 based on the main perception formed and the estimated states. The auxiliary processing system is configured to form an auxiliary perception based on signals from only a subset of the perception sensors (e.g., only the Lidars, assuming the perception sensors further include other types of sensors, like cameras), validate the computed trajectories based on the auxiliary perception formed (to enable a heterogeneous redundancy check), and cause the control unit to forward the validated trajectories to the DbW system 20.

This way, the vehicle can be remotely steered from the control unit, through the DbW system 20, based on validated trajectories forwarded by the control unit to the DbW system. All the sensors of the set are used to form the main perception. However, instead of re-using all of the perception sensors to form a full redundancy, only a subset of the sensors are used to form the auxiliary perception that is then used to validate the trajectories. In other words, distinct perceptions are formed from overlapping sets of sensors, whereby one of the perceptions formed is used to validate trajectories obtained from the other. This approach requires less computational efforts, inasmuch as less signals (and therefore less information) are required to form the auxiliary perception. Still, this approach is more likely to allow inconsistencies to be detected, thanks to the heterogeneity of sensor signals used to obtain the main and auxiliary perceptions.

Another, but closely related aspect of the invention concerns a computer program product. As indicated earlier, this product comprises a computer readable storage medium, which has program instructions embodied therewith. The program instructions can be executed by processing means of a computerized system 1 as described above, to cause the computerized system to execute several algorithmic iterations as described in reference to the present methods.

The above embodiments have been succinctly described in reference to the accompanying drawings and may accommodate a number of variants. Several combinations of the above features may be contemplated. Examples are given in the next section.

### 2. Particularly preferred embodiments

### 2.1 Preferred architecture

As illustrated in FIG. 1, the Lidars communicate with the *K* processing systems 11, 12, which process the sensor output data to decode 2D grids. Such grids are revised and then locally pre-fused at the processing systems 11, 12, before being revised and passed to the processing system 14, which merges all fused grids. The global occupancy grid is then revised again. Additional processing systems 15 are used to determine trajectories, e.g., based on a main and auxiliary perceptions, where the auxiliary perception is used to validate trajectories computed from the main perception, as explained in section 1. The validated trajectories are then passed to the DbW system 20 of the vehicle 2, to accordingly steer the latter.

All components of the main system 1 can be suitably synchronized. To that aim, the vehicle 2 may communicate with a backend unit 16, which coordinates all subsystems and components. In particular, the *K* processing systems 11, 12 and the further processing system 14 can be synchronized according to a networking protocol for clock synchronization.

### 2.2 Preferred flows

FIG. 2A shows high-level steps of a preferred flow. The sensors (e.g., Lidars, as assumed in the following) continually sense S5 portions of the designated area 5, whereby sensor output data are repeatedly sent to processing units 11, 12 of the system 1. At each algorithmic cycle, the processing units 11, 12 receive S10 new datasets corresponding to sensor output data. Such datasets are dispatched S20 to *K* processing systems, whereby each processing system *k* (*k* = 1 to *K*) receives *Nₖ* datasets and processes S30 them to obtain *Mₖ* occupancy grids, where 1 ≤ *Nₖ* ≤ *Mₖ.* As noted in section 1, some of the datasets might be discarded at step S30. E.g., the first system processes *N*₁ datasets to obtain *M*₁ occupancy grids, the second system processes *N*₂ datasets to obtain *M*₂ occupancy grids, etc. Each of the *Mₖ* occupancy grids is subject to the revision procedure S200. Next, each processing system *k* locally fuses the *Mₖ* grids obtained and timestamp them, step S40. Thus, *K* fused occupancy grids are obtained, which are again revised S200, and then collected and forwarded S50 to a further processing system 14.

The processing system 14 merges S60 the *K* fused occupancy grids to form a global occupancy grid, which is then suitably timestamped at the system 14. The global grid is revised S200, too. Revising a grid (FIG. 2B) requires to update S202 cell memory values, identify S204 cells in the unknown state (typically occluded cells) and attempt to refine S206 unknown states based on cell histories, using cell memory values as updated S202 last, as explained in section 1.

The vehicle trajectory is determined (or updated) at step S90, e.g., using one or more downstream processing systems. The determined trajectory is then forwarded S100 to the DbW system 20 of the vehicle 2, to accordingly steer the latter. The process loops back to step S10, thereby starting a new iteration based on new sensor output data. Such algorithmic iterations are executed at an average frequency that is between 5 and 20 hertz, typically equal to 10 hertz. This requires efficient computations and data transmissions, hence the benefits of the approach of FIGS. 1, 2A, and 2B. In a parallel loop, the state of the vehicle 2 is updated S110 by reconciling states as obtained from the global occupancy grid and odometry signals from the vehicle. The vehicle state obtained can then be used to determine or update S90 a subsequent trajectory.

FIG. 6 illustrates an example of application, where use is made of sensor measurements from Lidars 110 - 140 to plan (and then repeatedly update) a vehicle trajectory T for an automated car 2 and automatically drive this car to a given parking place P in a parking lot 5. Care should be taken not to collide with any obstacle, starting with other vehicles 3 already parked in the parking lot.

FIG. 2B shows sub-steps of general step S30 of FIG. 2A. For each dispatched dataset, a processing system accesses S32 a given dataset (i.e., a point cloud model of the environment of the respective Lidar) and processes the dataset to identify characteristics thereof (rays, ray elevation angles, ray projections, hit points, and hit point projections). Then, this processing system initializes S33 state of each cell of a grid (defined in polar coordinates) to the unknown state. The processing system subsequently determines S34 the states of the grid cells, based on several conditions, which are described in section 2.3. To that aim, the processing system iterates S342 - S348 over the rays. I.e., it selects S342 a next ray, assesses S344 the conditions applying to each impacted cell, and modifies S346 the cell states according to the conditions assessed, should such conditions be met. Once all rays have been processed S348, the processing system returns the populated grid.

### 2.3. Preferred backtracing algorithm

Each initial grid is obtained S30 by: (i) accessing a dataset capturing a point cloud model of an environment of each sensor (a 3D laser scanning Lidar); and (ii) processing the dataset accessed to identify characteristics of rays emitted by each sensor. Such characteristics include hit points of the rays, as well as projections of the hit points and projections of the rays on a plane corresponding to the ground of the designated area 5. The grid is then populated by determining cell states based on the identified characteristics.

In detail, the cell states are determined by assessing whether certain conditions are met, using a first height *h*₁, which is defined above the plane, and a second height *h*₂, which is defined above the first height. For example, the first height is between 3 and 8 cm (it is preferably equal to 5 cm), while the second height is between 12 and 30 cm (it is preferably equal to 20 cm). Each of the first height and the second height is measured with respect to the plane corresponding to the ground. Two conditions are the following. A necessary and sufficient condition for each cell to be in an occupied state is to be matched by a projection of a hit point located above the first height, while a necessary condition for each cell to be in a free state is to be crossed by a projection of an overhanging ray that has dropped below the second height when passing over said each cell. Eventually, the trajectory is determined (or updated) based on the grid obtained for each sensor.

The above conditions allow the states of several cells to be determined at once, because several cells can be crossed by a same ray projection. I.e., backtracing each ray makes it possible to determine the states of all cells that happen to be crossed by the projection of each overhanging ray. In other words, exploiting ray projections as proposed above speeds up the determination of the cell states.

The grid obtained for each sensor is preferably defined as a polar grid. I.e., the grid is defined according to a polar coordinate system, a pole of which corresponds to a location of each sensor. Each cell is defined by a given radius and a given azimuth. When determining the states of the cells, a third condition can be applied to each cell for it to be in a free state, should this cell be an outer cell on a same azimuth and at a larger radius than an inner cell that is matched by a projection of an inner hit point of a reference ray. According to this further condition, no overhanging ray is allowed to set this outer cell in a free state if this overhanging ray has already passed below the inner hit point when passing over the outer cell. This additional condition reduces the likelihood that cells within a vehicle's area will be marked as free.

A possible practical implementation relies on elevation angles of the rays. In that case, the identified characteristics further include elevation angles. The third condition can be enforced by comparing an elevation angle of the overhanging ray with an elevation angle of the reference ray. The elevation angle of the overhanging ray must be larger than the elevation angle of the reference ray to be allowed to set the outer cell in a free state. Such an implementation is particularly efficient because any valid hit point sets the minimal elevation required for all outer cells.

In practice, the method may iterate over the rays to assess the first condition (based on threshold height *h*₁), the second condition (based on threshold height *h*₂), and the further condition (based on minimal elevation angles). Preferred algorithms will attempt to find, for each cell, the highest hit point and set the elevation angle of this hit point as a minimal elevation angle for all outer cells (larger radius, same azimuth), if only to ensure that no ray reaching under a vehicle can set cells within a vehicle's area to a free state.

### 2.4. Temporality and timestamp management

A preferred implementation is one in which all sensor measurements are provided with timestamps, which correspond to the sensor measurement times. If several measurements from different Lidar sources are used, the oldest measurement time of all considered inputs is set as a measurement time in the outgoing data. This procedure makes it possible to keep track of the oldest time associated with the information considered at any point in the chain. This way, it is possible to determine the maximum time at which the system must be transferred to a safe state throughout the entire processing chain.

For example, the measurement time of the any point cloud can be sent to each voting system. At the prefusion stage, the oldest measurement time is set as an effective measurement time, as described in section 1. Since there is no clear definition of a reference time for a grid map, the average of all input measurement times is used to set the reference time for the grid map. Grid maps with a measurement age above 150 ms are discarded in order to avoid fusing obsolete information, something that would invalidate the entire grid map. In the global grid map generator, the same logic is applied as in the prefusion.

### 3. Technical implementation details

Computerized devices can be suitably designed for implementing embodiments of the present invention as described herein. In that respect, it can be appreciated that the methods described herein are non-interactive, i.e., automated, although human input may be required in certain cases, e.g., should an anomaly or emergency be detected. Automated parts of such methods can be implemented in software, hardware, or a combination thereof. In exemplary embodiments, automated parts of the methods described herein are implemented in software, as a service or an executable program (e.g., an application), the latter executed by suitable digital processing devices.

In the present context, each processing system 11, 12, 14, 15 unit is preferably mapped onto one or more respective sets of processors or, even, one or more respective computers. In particular, the system 15 may typically involve several processors or computers.

A suitable computer will typically include at least one processor and a memory (possibly several memory units) coupled to one or memory controllers. Each processor is a hardware device for executing software. The processor, which may in fact comprise one or more processing units (e.g., processor cores), can be any custom made or commercially available processor, likely subject to some certification.

The memory typically includes a combination of volatile memory elements (e.g., random access memory) and nonvolatile memory elements, e.g., a solid-state device. The software in memory may include one or more separate programs, each of which comprises an ordered listing of executable instructions for implementing logical functions. The software in the memory captures methods described herein in accordance with exemplary embodiments, as well as a suitable operating system (OS). The OS essentially controls the execution of other computer (application) programs and provides scheduling, input-output control, file and data management, memory management, and communication control and related services. It may further control the distribution of tasks to be performed by the processors. The methods described herein shall typically be in the form of executable program, script, or, more generally, any form of executable instructions.

In exemplary embodiments, each computer further includes a network interface or a transceiver for coupling to a network (not shown). In addition, each computer will typically include one or more input and/or output devices (or peripherals) that are communicatively coupled via a local input/output controller. A system bus interfaces all components. Further, the local interface may include address, control, and/or data connections to enable appropriate communications among the aforementioned components. The I/O controller may have additional elements, which are omitted for simplicity, such as controllers, buffers (caches), drivers, repeaters, and receivers, to allow data communication.

When a computer is in operation, one or more processing units executes software stored within the memory of the computer, to communicate data to and from the memory and/or the storage unit (e.g., a hard drive and/or a solid-state memory), and to generally control operations pursuant to software instruction. The methods described herein and the OS, in whole or in part are read by the processing elements, typically buffered therein, and then executed. When the methods described herein are implemented in software, the methods can be stored on any computer readable medium for use by or in connection with any computer related system or method.

Computer readable program instructions described herein can be downloaded to processing elements from a computer readable storage medium, via a network, for example, the Internet and/or a wireless network. A network adapter card or network interface may receive computer readable program instructions from the network and forwards such instructions for storage in a computer readable storage medium interfaced with the processing means. All computers and processors involved can be synchronized using any suitable protocol (e.g., NTP) or thanks to timeout messages.

Aspects of the present invention are described herein notably with reference to a flowchart and a block diagram. It will be understood that each block, or combinations of blocks, of the flowchart and the block diagram can be implemented by computer readable program instructions. These computer readable program instructions may be provided to one or more processing elements as described above, to produce a machine, such that the instructions, which execute via the one or more processing elements create means for implementing the functions or acts specified in the block or blocks of the flowchart and the block diagram. These computer readable program instructions may also be stored in a computer readable storage medium.

The flowchart and the block diagram in the accompanying drawings illustrate the architecture, functionality, and operation of possible implementations of the computerized systems, methods of operating it, and computer program products according to various embodiments of the present invention. Note that each computer-implemented block in the flowchart or the block diagram may represent a module, or a portion of instructions, which comprises executable instructions for implementing the functions or acts specified therein. In variants, the functions or acts mentioned in the blocks may occur out of the order specified in the figures. For example, two blocks shown in succession may actually be executed in parallel, concurrently, or still in a reverse order, depending on the functions involved and the algorithm optimization retained. It is also reminded that each block and combinations thereof can be adequately distributed among special-purpose hardware components.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant, or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, several architecture variants may be contemplated for the processing system 15, which involves one or more distinct computers.

## Claims

1. A computer-implemented method of steering an automated vehicle (2) in a designated area (5) using a set of one or more offboard sensors (110 - 140), the method comprising repeatedly executing algorithmic iterations, wherein each iteration of the algorithmic iterations comprises:
obtaining (S30) a grid as a 2D occupancy grid of cells by determining a state of each cell of the cells in accordance with a perception of the one or more offboard sensors (110 - 140);
performing (S200) a revision procedure, whereby the obtained grid is revised (S204, S206) by correcting the state determined for each of one or more of the cells based on a history thereof; and
determining (S90), based on the revised grid, a trajectory for the automated vehicle (2) and forwarding the determined trajectory to a drive-by-wire system (20) of the automated vehicle (2).

2. The method according to claim **1,** wherein
the state of said each cell is constrained to be one of three states, which consist of a free state, an occupied state, and an unknown state,
determining (S30) the state of said each cell comprises initializing (S33) each of the cells to the unknown state, prior to attempting to setting (S34) the state of said each cell to the free state or the occupied state in accordance with said perception, and
the obtained grid is revised (S204, S206) by
identifying (S204) cells of the obtained grid that are in the unknown state, and
inferring (S206) a state of each of the identified cells based on the respective history to correct the state as previously determined for each of the identified cells.

3. The method according to claim **2,** wherein, at said each iteration,
the history of said each cell is captured by a single cell memory value that reflects a historical propensity of said each cell to be in the free state or the occupied state,
the method further comprises updating (S202) the single cell memory value at said each iteration, and
the state of each of the identified cells is inferred in accordance with the respective, single cell memory value, as updated (S202) last.

4. The method according to claim **3,** wherein
the single cell memory value is updated (S202) so as to be increased, respectively decreased, if said each cell is determined to be in the free state, respectively the occupied state.

5. The method according to claim **4,** wherein
the single cell memory value is further updated (S202), at said each iteration, so that an absolute value thereof is decreased if the state of the corresponding cell is determined to be the unknown state.

6. The method according to claim **5,** wherein, at updating said single cell memory value,
the cell memory value is constrained to belong to a given interval of values.

7. The method according to claim **6,** wherein
said single cell memory value is defined as an integer value,
said single cell memory value is updated (S202) so as to be
incremented by 1, respectively decremented by 1, if said each cell is determined to be in the free state, respectively the occupied state, and
modified so that its absolute value is decremented by 1 if said each cell is determined to be in the unknown state, and
endpoints of said interval consist of integer values of opposite signs, the interval being preferably [-10, 10].

8. The method according to any one of claims **1** to 7, wherein
the set of one or more offboard sensors comprises *N* sensors (110 - 140), *N* ≥ 2, located at distinct positions in the designated area (5), each of the *N* sensors being a 3D laser scanning Lidar, and
said grid is obtained (S30) as a 2D occupancy grid for each of the *N* sensors, such that *N* grids are obtained at said each iteration.

9. The method according to claim **8,** wherein
the revision procedure is performed (S200) for each of the *N* grids as obtained at said each iteration, whereby the trajectory is determined (S90) based on the *N* grids as revised according to said revision procedure.

10. The method according to claim **8** or **9,** wherein
said each iteration further comprises fusing data from the N grids obtained to obtain a fused grid, prior to performing said revision procedure for the fused grid, whereby said trajectory is determined (S90) based on the fused grid as revised according to said revision procedure.

11. The method according to any one of claims **8** to **10,** wherein the *N* grids are obtained by:
dispatching (S20) sensor data to *K* processing systems (11, 12), whereby each processing system *k* of the *K* processing systems receives *Nₖ* datasets of the sensor data as obtained from *Nₖ* respective sensors of the set (10) of *N* offboard sensors (110 - 140), where *k* = 1 to *K, K* ≥ 2*, Nₖ* ≥ 2 ∀ *k,* and *N* = ∑*ₖ Nₖ*; and
processing (S30), at said each processing system *k,* the *Nₖ* datasets received to obtain *Mₖ* occupancy grids corresponding to perceptions from *Mₖ* respective sensors of the offboard sensors, respectively, *Nₖ* ≥ *Mₖ* ≥ 1, wherein the *Mₖ* occupancy grids overlap at least partly.

12. The method according to claim **11,** wherein
fusing the data from the *N* grids comprises fusing (S40), at said each processing system *k,* data from the *Mₖ* occupancy grids obtained to form a fused occupancy grid, whereby *K* fused occupancy grids are formed by the *K* processing systems (11, 12), respectively, and said revision procedure is performed by each of the *K* processing systems (11, 12) for a respective one of the *K* fused occupancy grids, and
said each iteration further comprises
forwarding (S50) the *K* fused occupancy grids, once revised, to a further processing system (14),
merging (S60), at the further processing system (14), the K fused occupancy grids to obtain a global occupancy grid for the designated area (5), and
performing the revision procedure for the global occupancy grid, whereby said trajectory is determined (S90) based on the global occupancy grid as revised according to said revision procedure.

13. The method according to any one of claims **1** to **12,** wherein said several algorithmic iterations are executed at an average frequency that is between 5 and 20 hertz, preferably equal to 10 hertz.

14. A computer program product for steering an automated vehicle (2) in a designated area (5), the computer program product comprising a computer readable storage medium having program instructions embodied therewith, the program instructions executable by processing means of a computerized system, to cause the computerized system to repeatedly execute several algorithmic iterations, each comprising:
obtaining (S30) a grid as a 2D occupancy grid of cells by determining a state of each cell of the cells in accordance with a perception of the one or more offboard sensors (110 - 140);
performing (S200) a revision procedure, whereby the obtained grid is revised (S204, S206) by correcting the state determined for each of one or more of the cells based on a history thereof; and
determining (S90), based on the revised grid, a trajectory for the automated vehicle (2) and forwarding the determined trajectory to a drive-by-wire system (20) of the automated vehicle (2).

15. A system for steering an automated vehicle (2) in a designated area (5), wherein the system comprises
a set (10) of one or more offboard sensors (110 - 140), each being preferably a 3D laser scanning Lidar, and
one or more processing systems (11, 12, 14) configured to repeatedly execute algorithmic iterations, wherein, in operation, each iteration of the algorithmic iterations comprises:
obtaining (S30) a grid as a 2D occupancy grid of cells by determining a state of each cell of the cells in accordance with a perception of the one or more offboard sensors (110 - 140);
performing (S200) a revision procedure, whereby the obtained grid is revised (S204, S206) by correcting the state determined for each of one or more of the cells based on a history thereof; and
determining (S90), based on the revised grid, a trajectory for the automated vehicle (2) and forwarding the determined trajectory to a drive-by-wire system (20) of the automated vehicle (2).
